Europäisches Patentamt

European Patent Office

Office européen des brevets

(11) Numéro de publication: **0 507 668 B1**

# FASCICULE DE BREVET EUROPEEN

(45) Date de publication de fascicule du brevet: **01.03.95**

(51) Int. Cl.6: **C03B 5/02**, G21F 9/32, H05B 6/80

(21) Numéro de dépôt: **92400893.1**

(22) Date de dépôt: **31.03.92**

(54) **Four de fusion à micro-ondes pour la vitrification et/ou la densification de matériaux.**

(30) Priorité: **03.04.91 FR 9104037**

(43) Date de publication de la demande:
**07.10.92 Bulletin 92/41**

(45) Mention de la délivrance du brevet:
**01.03.95 Bulletin 95/09**

(84) Etats contractants désignés:
**AT BE CH DE DK ES FR GB GR IT LI LU NL PT SE**

(56) Documents cités:
**GB-A- 2 157 062**
**US-A- 3 747 542**

**PATENT ABSTRACTS OF JAPAN vol. 6, no. 154 (C-119)(1032) 14 Août 1982**

(73) Titulaire: **SOCIETE GENERALE POUR LES TECHNIOUES NOUVELLES S.G.N. Société anonyme dite:**
**1, rue des Hérons**
**Montigny-le-Bretonneux**
**F-78184 Saint-Ouentin-en-Yvelines Cédex (FR)**

(72) Inventeur: **Aubert, Bruno**
**Chemin du Paradis**
**F-30330 Connaux (FR)**

(74) Mandataire: **Mongrédien, André et al**
**c/o BREVATOME**
**25, rue de Ponthieu**
**F-75008 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

DOMAINE DE L'INVENTION

L'invention concerne le stockage définitif de matériaux toxiques, et en particulier, des déchets radioactifs issus des centrales nucléaires, ou du retraitement de combustibles irradiés retraités ou non. L'invention s'applique également à des déchets chimiques. Elle concerne plus particulièrement la vitrification de tels déchets au moyen de fours à micro-ondes. Elle peut également être utilisée pour la densification de matériaux.

ART ANTERIEUR

Le stockage des déchets toxiques, tels que des déchets radioactifs, pose de graves problèmes vis-à-vis de l'environnement. Pour éviter la dissémination de ce genre de matériaux, une solution largement connue consiste à immobiliser ces déchets dans des matériaux résistant aux différentes corrosions dans le temps. C'est ainsi que la vitrification permet l'immobilisation de ces déchets sous une forme stable.

L'effet des micro-ondes sur' la matière est connu, car sous l'action d'un champ électrique alternatif, les matériaux diélectriques s'orientent dans un sens, puis dans l'autre. Ces cycles de polarisation conduisent à un échauffement.

D'autre part, dans le domaine de la vitrification des déchets radioactifs à l'aide de micro-ondes, il est connu de broyer ces déchets, puis de les déverser dans un conteneur situé dans un four à micro-ondes. Les déchets peuvent être constitués de verre, de céramique ou de cendre et en outre de filtres en fibre de verre ou d'amiante. Le générateur de micro-ondes est alors mis en route, la fusion des déchets s'opérant peu à peu. Lorsque celle-ci est terminée, le conteneur est sorti du four.

D'une façon générale, dans les procédés actuels, la répartition des micro-ondes se fait selon un processus multimodal. Ce type de fonctionnement est avantageux car il permet d'avoir un four suffisamment grand et de traiter suffisamment de déchets pour une installation industrielle rentable fonctionnant en discontinu. Toutefois, un tel dispositif ne permet pas de contrôler l'uniformité du champ électrique, et donc du traitement. En conséquence, il y a un risque de points chauds et donc de volatilisation incontrôlée et un risque de points froids, donc d'obtention de phases solides de natures différentes. Les différents produits alors obtenus ont des propriétés différentes. Le manque de reproductibilité de ces propriétés ne permet pas de garantir la sûreté des stockages.

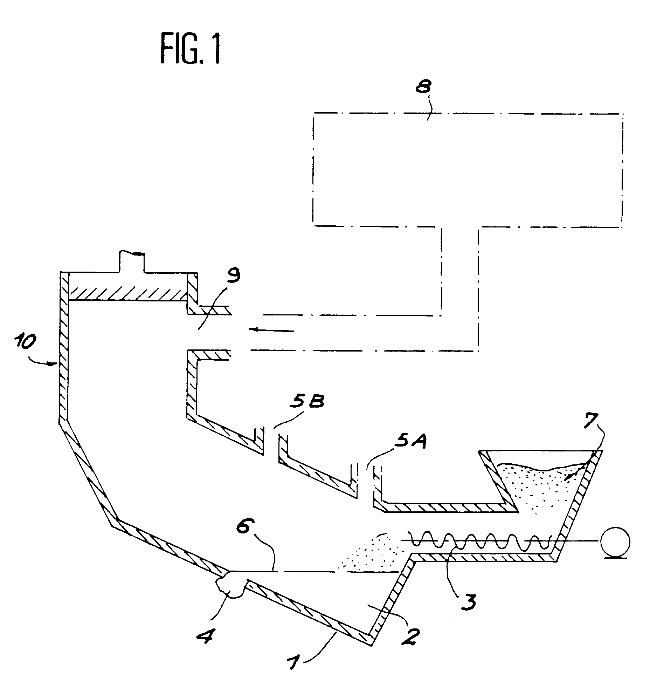

La figure 1 représente un four de fusion décrit dans la publication de C. SHIBATA et H. TAMAI, extrait de la revue J1 de Microwave Power and Electromagnetic Energy (Vol. 25, N° 2, 1990). Ce four est incliné et utilise un procédé de fusion des déchets en continu et monomodal.

Ce four comprend une partie supérieure droite 10, par laquelle arrive les micro-ondes et une partie inférieure inclinée 1, constituant la cuve de fusion et contenant donc le produit de fusion 2. Les micro-ondes arrivent dans la partie supérieure 10 au moyen d'une alimentation par guide d'ondes 8 débouchant par une fenêtre 9, perpendiculairement, dans cette partie supérieure 10. D'autre part, le produit à fondre est stocké dans une trémie 7 et est amené dans la cuve de fusion 1 au moyen d'une vis doseuse latérale 3. Le produit fondu coule par une sortie 4, appelée également "surverse". Cette sortie 4 est placée au niveau de la surface du bain de fusion 2. Les gaz sont extraits par une cheminée 5A ou 5B qui peut être placée, soit près de l'alimentation en produit comme c'est le cas pour 5A, soit du côté de l'arrivée des micro-ondes comme c'est le cas pour 5B.

Un tel dispositif peut fonctionner en continu et permet de garder en réserve une masse de matériau en fusion. Après l'arrêt d'un tel four, cette masse de matériau se refroidit et se solidifie. La quantité d'énergie nécessaire, sous forme de micro-ondes, pour porter à la fusion cette quantité de matière est bien moindre que s'il s'agissait du produit brut d'alimentation.

D'autre part, un tel dispositif présente de nombreux inconvénients, qui sont les suivants.

Une telle configuration de cuve de fusion 1 fait que la répartition des micro-ondes sur la surface du bain de fusion 6 engendre un gradient de température trop important. Il y a alors un risque important de bouchage de l'orifice de sortie 4. Un débouchage nécessite alors l'arrêt et même le démontage du four 10, ou de la cuve de fusion 1.

Dans le souci d'éviter des décharges, l'extraction des gaz par la sortie 5A doit se faire dans la zone de faible puissance par rapport aux micro-ondes, pour éviter une remontée des gaz conducteurs vers la partie supérieure 10 du four où règne la plus forte puissance. Dans l'exemple décrit, la sortie des gaz 5A est donc placée au-dessus du bain de fusion 2, près de la sortie de l'alimentation par vis 3. Par contre, il subsiste alors un risque d'aspiration du produit à fondre, si ce produit est constitué en partie de cendres. En

EP 0 507 668 B1

conséquence, l'extraction des gaz par la sortie 5A doit être effectuée à très faible débit. On n'est alors pas certain d'éliminer tous les gaz en présence.

Si la sortie des gaz se trouve du côté opposé à la sortie de l'alimentation par vis 3, comme c'est le cas pour la sortie de gaz 5B, cette dernière se trouve donc très près de la zone de forte puissance. Le risque de décharge est donc nettement accru.

Le but de l'invention est de remédier à ces différents inconvénients en proposant une structure de four et de cuve de fusion différente.

RESUME DE L'INVENTION

A cet effet, l'invention a pour objet un four de fusion à micro-ondes pour la vitrification et/ou la densification de matériaux, comportant :
- un corps de four comprenant une partie inférieure constituant une cuve de fusion, un orifice d'entrée des matériaux à fondre, un orifice de sortie des matériaux fondus placés à la hauteur du niveau souhaité de bain de fusion, une sortie des gaz et une entrée des micro-ondes ; et
- un générateur de micro-ondes relié à l'orifice d'entrée des micro-ondes.

Selon l'invention, la partie inférieure du four a une paroi supérieure horizontale, de manière à délimiter un volume, au-dessus du bain de fusion, de section constante sur la plus grande longueur possible, pour favoriser une répartition régulière de la puissance dispensee par les micro-ondes au bain de fusion.

Dans la réalisation preférentielle du four selon l'invention, le corps du four est un tube et la partie inférieure constituant la cuve de fusion est une partie horizontale de ce tube, l'orifice d'entrée des matériaux à fondre et l'entrée des micro-ondes étant placés à une première extrémité du tube.

Cette réalisation se complète avantageusement par le fait que la deuxième extrémité du tube est fermée par une surface de réflexion des micro-ondes, pour renvoyer celle-ci vers la surface du bain de fusion.

De préférence, cette surface de réflexion est l'extrémité d'un piston coulissant dans la deuxième extrémité du tube, pour permettre un réglage de la position de cette surface de réflexion en fonction de la longueur d'onde des micro-ondes.

Dans ce cas, le piston est avantageusement complète d'un piège à micro-ondes constitué d'au moins une chambre placée derrière la surface de réflexion et débouchant dans le jeu entre le piston et la paroi interne de la deuxième extrémité du tube.

Dans la configuration préférentielle du four selon l'invention, les deux extrémités du tube sont verticales, le tube ayant une forme recourbée en U ou en J.

Dans la réalisation préférentielle du four selon l'invention, on a choisi le fonctionnement monomodal, les différentes parties du tube ayant toutes la même section favorisant la propagation monomodale des micro-ondes.

Pour faciliter l'écoulement des matériaux fondus par l'orifice de sortie et empêcher le bouchage de ce dernier, l'orifice de sortie des matériaux fondus est large, permettant ainsi l'action des micro-ondes sur les matériaux s'échappant par cet orifice.

Il est avantageux de placer alors la sortie des gaz sur la deuxième extrémité.

Il est également possible de compléter la cuve de fusion d'un circuit de refroidissement par eau.

Dans le cadre de la réalisation du four avec deux extrémités verticales, ces deux extrémités sont reliées à la partie inférieure horizontale servant de cuve de fusion par des coudes à double coin délimitant ainsi des portions inclinées entre les deux coins d'une jonction.

Dans ce cas, le tube a de préférence une section rectangulaire de côtés A et B, avec B = 2A et avec B ≤ L, L étant la longueur d'onde des micro-ondes.

De préférence, l'angle d'inclinaison des portions inclinées est de 45° et les longueurs intérieure C et extérieure D des portions inclinées des coudes à double coin sont égales à respectivement C = L/4 - A.tg 22°5′ et D = L/4 + A.tg 22°5′.

LISTE DES FIGURES

La description qui suit explicite l'invention et ses caractéristiques techniques et est accompagnée de deux figures, qui représentent respectivement :
- figure 1, un exemple de réalisation d'un four selon l'art antérieur ; et
- figure 2, le four selon l'invention.

3

DESCRIPTION DETAILLEE D'UNE REALISATION DE L'INVENTION

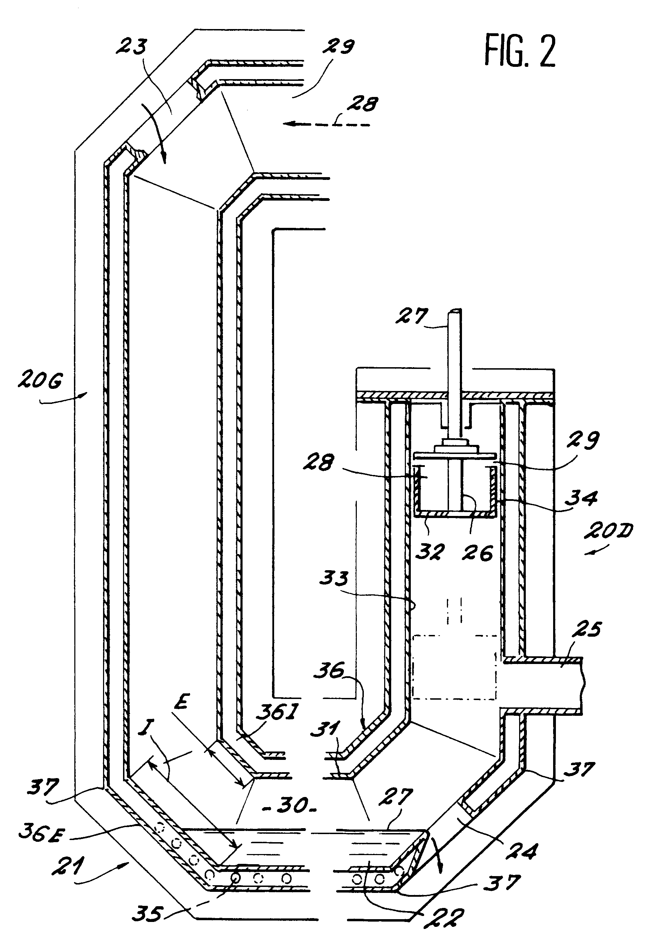

Le four représenté sur la figure 2 a une forme générale en U, c'est-à-dire avec deux branches verticales reliées par une branche horizontale. Ceci ne constitue évidemment qu'un exemple de réalisation.

Le bain de fusion 22 se trouve dans la partie inférieure 21 qui constitue une cuve de fusion. Par une première extrémité de gauche 20G, sont introduits les matériaux à fondre. On note à ce sujet, que ces matériaux doivent être non conducteurs et susceptibles d'absorber des micro-ondes, autrement dit présentant des pertes diélectriques et étant des matériaux non sujets à la sublimation, c'est-à-dire qui ne passent pas directement de l'état solide à l'état gazeux. Ces matériaux sont en général les déchets contenant notamment des métaux lourds oxydés. On note également que les cendres d'incinération sont particulièrement bien adaptées à ce type de traitement.

Pour améliorer le rendement des micro-ondes, il est préférable de mettre les déchets sous forme compacte avant leur fusion. Il n'est par contre pas obligatoire d'obtenir des pastilles très dures, mais simplement des pastilles d'une rigidité suffisante pour permettre leur manutention. Le but de ce compactage est également d'éliminer des envolées de poudre ou de cendre lors de l'introduction des déchets dans le four et de diminuer la quantité d'air introduite dans ces déchets. Dans la réalisation décrite sur cette figure 2, les matériaux à fondre sont également introduits par cette première extrémité de gauche 20G, et plus précisément, par un orifice d'alimentation 23, placé dans la partie supérieure de cette première extrémité 20G. Cette dernière a été représentée recourbée, mais ceci n'est pas une mesure obligatoire. Cette forme est simplement adaptée à une installation fournissant des micro-ondes particulièrement adaptées à ce type de four de fusion, au moyen d'un guide d'ondes orienté dans une direction symbolisée par la flèche horizontale 28 et aboutissant dans la partie supérieure de cette première extrémité de gauche 20G, par l'intermédiaire d'un orifice d'alimentation en micro-ondes 29.

Une caractéristique essentielle de l'invention est que le bain de fusion 22 se trouve dans une portion horizontale du four 21 constituant la cuve de fusion et dont le volume permet une répartition uniforme de la puissance des micro-ondes sur toute la surface 27 du bain de fusion 22. En d'autres termes, le volume 30 se trouvant au-dessus de la surface 27 du bain de fusion 22 et en-dessous de la paroi supérieure 31 de la partie inférieure 21 faisant office de cuve de fusion a une section transversale favorisant le passage et la répartition uniforme des micro-ondes sur cette surface 27 du bain de fusion 22. La paroi supérieure 31 de la cuve de fusion 21 est donc horizontale, la hauteur séparant cette dernière de la surface 27 du bain de fusion 22 étant constante sur la majeure partie de la longueur de cette surface 27. Les deux traits d'axe verticaux séparant cette cuve de fusion 21 en deux parties montrent que celle-ci peut être d'une longueur variable, la paroi supérieure 31 devant rester horizontale. La section du volume 30 au-dessus de la surface 27 du bain de fusion 22 doit donc être constante sur la plus grande longueur.

Dans la réalisation préférentielle du four selon l'invention, le corps de celui-ci est constitué de préférence d'un tube englobant toutes les parties successives du four. Ainsi, la première extrémité de gauche 20G est la première extrémité du tube, et est de préférence verticale. Après un coude, le tube constitue la partie horizontale qui est la cuve de fusion 21. Les micro-ondes, introduites par l'accès latéral 29, dans la première extrémité de gauche 20G, se propagent donc jusque dans la partie inférieure 21, à travers l'espace 30 situé entre la surface 27 du bain de fusion 22 et la paroi supérieure 31 de la cuve de fusion 21.

Cette configuration de la cuve de fusion 21 permet d'utiliser une des principales caractéristiques techniques secondaires du four selon l'invention, qui est l'utilisation d'une surface de réflexion 32 des micro-ondes, pour que les micro-ondes non absorbées au préalable parcourent le chemin inverse, dans le but d'exploiter la quantité maximale de la puissance des micro-ondes. On rentabilise ainsi le rendement des micro-ondes en réglant convenablement la position du piston 26, en particulier en adaptant l'impédance du couple four/déchets qui varie considérablement entre le démarrage du four et la fusion des matériaux.

Une deuxième extrémité de droite 20D termine le four selon l'invention, et en particulier, le tube. Cette deuxième extrémité de droite 20D a été représentée verticale comme l'extrémité de gauche 20G. Ceci n'est qu'un mode de réalisation.

La surface de réflexion 32 est de préférence celle d'un piston 26 monte coulissant à l'intérieur de la paroi interne 33 de la deuxième extrémité de droite 20D. Ceci permet de régler la position de cette surface de reflexion 32 en fonction de la puissance et de la longueur d'onde des micro-ondes. Il suffit alors de déplacer le piston 26 au moyen de sa tige de commande 27.

On peut également équiper ce piston 26 de deux cavités internes 28 possedant une ouverture 29 mettant en communication la chambre 28 avec l'espace minimal éventuel subsistant entre la paroi interne 33 de la deuxième extrémité de droite 20D et la paroi externe latérale 34 du piston 26. Ceci constitue un piège pour les micro-ondes qui auraient tendance à passer dans le jeu subsistant entre le piston 26 et la paroi interne 33 de cette deuxième extrémité de droite 20D.

Un orifice de sortie des matériaux fondus 24 est place de préférence vers la deuxième extrémité de droite 20D, à l'opposé du côte d'alimentation en déchets solides, pour éviter la sortie de déchets incomplètement fondus.

Un orifice de sortie des gaz 25 a été placé en bas de cette deuxième extrémité de droite 20D, mais cette disposition n'est pas la seule possible. la position de l'orifice de sortie des gaz 25 sur la deuxième extrémité de droite 20D du four permet d'éviter la dissémination des gaz dans la partie du four servant à la propagation des micro-ondes.

On a symbolisé des canalisations 35 à l'intérieur des parois de la cuve de fusion 21 pour montrer la présence préférentielle d'un circuit de refroidissement par eau par double enveloppe. Ceci permet d'éviter l'effet de corrosion intense des produits lorsque la fusion atteint 1 100°C.

Comme le montre cette figure 2, les deux extrémités 20G et 20D sont reliées à la partie horizontale qui est la cuve de fusion 21 au moyen de deux coudes à double coin. En effet, la cuve de fusion 21 est reliée à chacune des deux extrémités 20G et 20D par deux parois obliques 36I et 36E respectivement interne et externe. Chaque paroi oblique 36I et 36E délimite sur la figure 2 deux coins 37. Dans la réalisation décrite sur cette figure, l'inclinaison de ces parois intermédiaires 36I et 36E est de 45°, mais cette inclinaison n'est pas limitative.

Par contre, la proportion des distances respectives I de 36I et E de 36E doit de préférence respecter les formules suivantes, établi es en fonction de la longueur d'onde L des micro-ondes :

$$I = L/4 - A.tg\ 22°5',$$

et

$$E = L/4 + A.tg\ 22°5'.$$

Ces proportions sont calculées pour que la propagation des micro-ondes soit monomodale ou ait lieu en monomode.

Ces dispositions se complètent avantageusement en adoptant pour toutes les parties constituant le tube, une section rectangulaire dont les côtés A et B sont tels que B = 2A, avec B ≤ L qui est la longueur d'onde de propagation des micro-ondes dans les guides d'ondes.

L'orifice de sortie 24 a, dans la réalisation préférentielle du four selon l'invention, une forme particulière qui est constituée principalement par une ouverture relativement large de cet orifice. Ceci facilite l'action des micro-ondes sur les matériaux fondus qui s'écoulent à travers cet orifice de sortie 24 de manière à empêcher les phénoménes de bouchage de cet orifice de sortie 24. Cette taille de l'orifice de sortie 24 peut être néanmoins ajustée en fonction de la taille du four et du débit souhaité. On note toutefois la présence d'une surface inclinée 37 donnant à la section de cet orifice de sortie 24 une forme évasée vers le bas, de manière à favoriser l'écoulement des matériaux fondus.

## FONCTIONNEMENT DU FOUR SELON L'INVENTION

Avant la première campagne de fusion, le four doit être vide. On introduit alors les matériaux à fondre, en l'occurrence des déchets sous forme compactée, en quantité suffisante. Ceux-ci tombent dans la cuve de fusion 21.

Le générateur de micro-ondes est ensuite mis en marche. Un tel four est particulièrement bien adapté pour utiliser des fréquences comprises de 915 à 2 450 MHz représentant des puissances de 0,5 à 2 kW/kg de déchets à traiter.

La température des déchets s'élève alors.

Des gaz sont dégagés et sont aspirés par l'orifice de sortie des gaz 25. Cette évacuation des gaz est particulièrement intéressante pour des gaz conducteurs qui peuvent se former, tels que le $CO_2$, ou tout simplement l'air chaud. Effectivement, des arcs électriques peuvent se produire, ceci étant très préjudiciable pour le bon fonctionnement du four.

Lorsque les déchets ont atteint leur point de fusion et qu'ils sont en quantité suffisante dans la cuve de fusion 21, ces matériaux fondus s'écoulent par l'orifice de sortie 24.

Il suffit alors de rajouter régulièrement des déchets pour entretenir la coulée.

On note que la fusion complète des matériaux peut ne pas être obtenue, du moment que la viscosité du matériau en cours de fusion est suffisante pour assurer l'évacuation de ce matériau. Une viscosité de 1 000 poises environ est une valeur limite au-delà de laquelle la coulée s'avère difficile.

On précise qu'il est avantageux de maintenir dans la cuve de fusion 21 une quantité de matériau fondu refroidi entre deux campagnes. Cette réserve permet de diminuer la puissance nécessaire pour atteindre la fusion lors du début de la seconde campagne, au cours du préchauffage.

Dans le cadre de l'obtention d'un verre, soit en traitant des déchets vitrifiables, soit en ajoutant des composants nécessaires à la formation d'un verre en combinaison avec les composants des déchets, on peut donner l'exemple de réalisation suivant.

EXEMPLE DE VITRIFICATION OBTENUE

On a fondu des déchets (cendre d'incinérateur) de composition suivante :

| | |
|---|---|
| ZnO | 34 % |
| CaO | 28 % |
| $SiO_2$ | 15,6 % |
| $Al_2O_3$ | 11,5 % |
| $P_2O_5$ | 4,1 % |
| $TiO_2$ | 2,8 % |
| MgO | 1,6 % |
| $MnO_2$ | 1,3 % |
| $Fe_2O_3$ | 0,6 % |
| CdO | 0,5 % |

Cette cendre simule la cendre radioactive d'incinérateur de déchets radioactifs.

La coulée est obtenue pour une viscosité de 200 poises.

La température de fondu est de 1 100 °C.

Le débit du four est de 1,8 kg/h.

La puissance du générateur est de 5 kW.

La fréquence utilisée est de 2 450 $MH_z$.

La réalisation décrite concerne la vitrification de déchets. Le four selon l'invention est également adapté pour la densification de matériaux tels que les céramiques, les vitres-céramiques et les vitres ou verres.

**Revendications**

1. Four de fusion à micro-ondes pour la vitrification, et/ou la densification de matériaux, comportant :
   - un corps comprenant une partie inférieure constituant une cuve de fusion (21), un orifice d'entrée des matériaux (23), un orifice de sortie des matériaux fondus (24) placé à hauteur du niveau souhaité de la surface (27) du bain de fusion (22), un orifice de sortie des gaz (25) et un orifice d'entrée des micro-ondes (29) ; et
   - un générateur de micro-ondes (28) relié à l'orifice d'entrée des micro-ondes (29), caractérisé en ce que la cuve de fusion (21) a une paroi supérieure (31) horizontale, de manière à délimiter un volume (30), au-dessus de la surface du bain de fusion (27), de section constante, sur la plus grande longueur possible, pour favoriser une répartition régulière de la puissance dispensée par les micro-ondes au bain de fusion (22).

2. Four selon la revendication 1, caractérisé en ce que le corps est un tube, la partie inférieure constituant la cuve de fusion (21) étant une partie horizontale de ce tube, les orifices d'entrée des matériaux (23) et des micro-ondes (29) étant placés sur une première extrémité (20G) de ce tube.

3. Four selon la revendication 2, caractérisé en ce que le tube a une deuxième extrémité (20D) fermée par une surface de réflexion (32) des micro-ondes, pour renvoyer les micro-ondes non absorbées vers la surface (27) du bain de fusion (22).

4. Four selon la revendication 3, caractérisé en ce que la surface de réflexion (32) est l'extrémité d'un piston (26) coulissant dans la deuxième extrémité (20D) pour permettre un réglage de la position de cette surface de réflexion (32) en fonction de la longueur d'onde (L) des micro-ondes.

**5.** Four selon la revendication 4, caractérisé en ce que le piston (26) est complété d'un piège à micro-ondes constitué d'au moins une chambre (28) placée derrière la surface de réflexion (32) et débouchant par un trou (29) dans le jeu subsistant entre le piston (26) et la paroi interne (33) de la deuxième extrémité (20D) du tube.

**6.** Four selon l'une quelconque des revendications 3 à 5, caractérisé en ce que les première et deuxième extrémités (20G, 20D) sont verticales, le tube ayant une forme recourbée en U ou en J.

**7.** Four selon l'une quelconque des revendications 2 à 6, caractérisé en ce que les différentes parties du tube ont toutes la même section favorisant la propagation monomodale des micro-ondes.

**8.** Four selon la revendication 7, caractérisé en ce que la section des différentes parties du tube est rectangulaire de côtés A et B avec $B = 2A$ et $B \leqq L$, L étant la longueur d'onde des micro-ondes.

**9.** Four selon l'une quelconque des revendications précédentes, caractérisé en ce que l'orifice de sortie des matériaux fondus (24) est large pour permettre l'action des micro-ondes sur les matériaux qui s'en écoulent, de manière à empêcher d'éventuels bouchages de cet orifice de sortie (24).

**10.** Four selon l'une quelconque des revendications 3 à 6, caractérisé en ce que la sortie des gaz (25) est placée sur la deuxième extrémité (20D) du tube.

**11.** Four selon l'une quelconque des revendications précédentes, caractérisé en ce que la cuve de fusion (21) est entourée d'un circuit de refroidissement (35).

**12.** Four selon la revendication 6, caractèrisé en ce que les deux extrémités (20G, 20D) sont reliées à la partie inférieure horizontale servant de cuve de fusion (21) par des coudes à double coin, délimitant des portions inclinées (36) entre deux coins (37).

**13.** Four selon la revendication 12, caractèrisé en ce que l'angle d'inclinaison des portions inclinées (36) est égal à 45°, et en ce que les longueurs intérieure (30I) et extérieure (30E) des portions inclinées (36) de coude à double coin ont des longueurs respectives correspondant à :

$$I = L/4 - A.tg\ 22°4',$$

et

$$E = L/4 + A.tg\ 22°4'.$$

**Claims**

**1.** Microwave melting furnace for the vitrification and/or densification of materials comprising a body having a lower part constituting a melting vessel (21), an inlet opening for the materials (23), an outlet opening for the molten materials (24) placed at the height of the desired level of the surface (27) of the molten bath (22), a discharge opening for the gases (25) and an inlet for the microwaves (29) and a microwave generator (28) connected to the inlet opening for the microwaves (29), characterized in that the melting vessel (21) has an upper horizontal wall (31), so as to define a volume (30), above the surface of the molten bath (27), which has a constant cross-section over the greatest possible part of its length, in order to favour a regular distribution of the power supplied by the microwaves to the molten bath (22).

**2.** Furnace according to claim 1, characterized in that the body is a tube, the lower part constituting the melting vessel 21 being a horizontal part of said tube, the inlet openings for the materials (23) and microwaves (29) being placed on a first end (20G) of said tube.

**3.** Furnace according to claim 2, chartacterized in that the tube has a second end (20D) closed by a microwave reflection surface (32) for reflecting the non-absorbed microwaves onto the surface (27) of the molten bath (22).

# EP 0 507 668 B1

4. Furnace according to claim 3, characterized in that the reflection surface (32) is the end of a piston (26) sliding in the second end (20D) to permit the regulation of the position of said reflection surface (32) as a function of the wavelength (L) of the microwaves.

5. Furnace according to claim 3, characterized in that the piston (26) is completed by a microwave trap constituted by at least one chamber (28) positioned behind the reflection surface (32) and issuing by a hole (29) into the gap left between the piston (26) and the inner wall (33) of the second tube end (20D).

6. Furnace according to any one of the claims 3 to 5, characterized in that the first and second ends (20G, 20D) are vertical, the tube having a U or J-curved shape.

7. Furnace according to any one of the claims 2 to 6, characterized in that the different parts of the tube all have the same cross-section favouring the monomodal propagation of the microwaves.

8. Furnace according to claim 7, characterized in that the cross-section of the different parts of the tube is rectangular with sides A and B with B = 2A and B ≤ L, L being the wavelength of the microwaves.

9. Furnace according to any one of the preceding claims, characterized in that the outlet opening for the molten materials (24) is wide, in order to permit the action of the microwaves on the materials flowing out therefrom, so as to prevent any blocking of the outlet opening (24).

10. Furnace according to any one of the claims 3 to 6, characterized in that the gas discharge opening (25) is placed on the second tube end (20D).

11. Furnace according to any one of the preceding claims, characterized in that the melting vessel (21) is surrounded by a cooling circuit (35).

12. Furnace according to claim 6, characterized in that the two ends (20G, 20D) are connected to the lower horizontal part serving as the melting vessel (21) by double corner bends defining inclined portions (36) between two corners (37).

13. Furnace according to claim 12, characterized in that the angle of inclination of the inclined portions (36) is 45° and that the internal (30I) and external (30E) lengths of the inclined double corner bend portions (36) are respectively:

$$I = L/4 - A \cdot tg\ 22°4',$$

and

$$E = L/4 + A \cdot tg\ 22°4'.$$

## Patentansprüche

1. Mikrowellenschmelzofen zur Verschmelzung bzw. Verdichtung von Materialien, bestehend aus:
   - einem Gehäuse, dessen unterer Teil einen Schmelztrog (21) enthält, einer Materialeinführungsöffnung (23), einer Austrittsöffnung der geschmolzenen Materialien (24), die sich in der gewünschten Höhe über der Oberfläche des Schmelzbades (22) befindet, einer Gasaustrittsöffnung (25) sowie einer Mikrowelleneintrittsöffnung (29); und
   - einem Mikrowellengenerator (28), der mit der Mikrowelleneintrittsöffnung (29) verbunden ist, dadurch gekennzeichnet, daß der Schmelztrog (21) eine obere horizontale Wand (31) zur Abgrenzung eines bestimmten Volumens (30) über dem Schmelzbad (27) besitzt, die über die größtmögliche Länge hinweg einen konstanten Querschnitt besitzt, um eine gleichmäßige Verteilung der durch die Mikrowellen dem Schmelzbad (22) zugeführten Energie zu gewährleisten.

2. Ofen nach Anspruch 1, dadurch gekennzeichnet, daß das Gehäuse die Form eines Rohres hat, dessen unterer Teil den Schmelztrog (21) bildet, der ein horizontaler Bestandteil dieses Rohres ist, wobei sich die Materialeinführungsöffnung (23) und die Mikrowelleneintrittsöffnung (29) an dem einen Ende (20G) dieses Rohres befinden.

8

3. Ofen nach Anspruch 2, dadurch gekennzeichnet, daß das andere Ende (20D) des Rohres durch eine Mikrowellen-Reflexionsfläche (32) verschlossen ist, um die nicht absorbierten Mikrowellen auf die Oberfläche (27) des Schmelzbades (22) zurückzusenden.

4. Ofen nach Anspruch 3, dadurch gekennzeichnet, daß die Reflexionsfläche (32) das Ende eines Kolbens (26) bildet, der sich in dem anderen Ende des Rohres (20D) gleitend bewegt, um die Position dieser Reflexionsfläche (32) in Abhängigkeit von der Wellenlänge (L) der Mikrowellen regulieren zu können.

5. Ofen nach Anspruch 4, dadurch gekennzeichnet, daß der Kolben (26) mit einer Mikrowellenfalle ausgestattet ist, welche mindestens eine Kammer (28) bildet, die sich hinter der Reflexionsfläche (32) befindet und über ein Loch (29) in den freien Raum mündet, der sich zwischen dem Kolben (26) und der inneren Wand (33) des anderen Rohrendes (20D) befindet.

6. Ofen nach einem der Ansprüche 3 bis 5, dadurch gekennzeichnet, daß die beiden Rohrenden sich (20G, 20D) in senkrechter Lage befinden, wobei das Rohr eine zu einem "U" oder "J" gekrümmte Form aufweist.

7. Ofen nach einem der Ansprüche 2 bis 6, dadurch gekennzeichnet, daß die verschiedenen Teile des Rohres alle den gleichen Querschnitt haben, wodurch eine monomodale Ausbreitung der Mikrowellen begünstigt wird.

8. Ofen nach Anspruch 7, dadurch gekennzeichnet, daß der Querschnitt der einzelnen Teile des Rohres rechteckig ist und die Kanten A und B aufweist, wobei B = 2A und B ≤ L und L die Wellenlänge der Mikrowellen ist.

9. Ofen nach einem der voranstehenden Ansprüche, dadurch gekennzeichnet, daß die Austrittsöffnung der geschmolzenen Materialien (24) breit ist, damit eventuelle Verstopfungen der Austrittsöffnung (24) durch die infolge der Einwirkung der Mikrowellen zerfließenden Materialien vermieden werden können.

10. Ofen nach einem der Ansprüche 3 bis 6, dadurch gekennzeichnet, daß die Gasaustrittsöffnung (25) an dem anderen Ende des Rohres (20D) angeordnet ist.

11. Ofen nach einem der voranstehenden Ansprüche, dadurch gekennzeichnet, daß der Schmelztrog (21) von einem Kühlkreislauf (35) umgeben ist.

12. Ofen nach Anspruch 6, dadurch gekennzeichnet, daß die beiden Rohrenden (20G, 20D) an dem unteren horizontalen Teil, der als Schmelztrog (21) dient, durch ein Kniestück miteinander verbunden sind, das einen Doppelknick aufweist, welcher die beiden geneigten Knierohrabschnitte (36) zwischen zwei Knickstellen (37) voneinander abgrenzt.

13. Ofen nach Anspruch 12, dadurch gekennzeichnet, daß der Neigungswinkel der geneigten Knierohrabschnitte (36) 45 ° beträgt, und daß die inneren und äußeren Strecken (30I) der geneigten Abschnitte (36) des Kniestückes mit Doppelknick die nachfolgenden entsprechenden Längen haben:

I = L/4 - A.tg 22 ° 4',

und

E = L/4 + A.tg 22 ° 4'.

# FIG. 1

FIG. 2